# EUROPEAN PATENT APPLICATION

(11) **EP 2 410 490 A2**
(43) Date of publication of application: **25.01.2012**
(21) Application number: 11172677.4
(22) Date of filing: 05.07.2011
(51) Int. Cl.: G06T 11/00

(54) **Displaying augmented reality information**

(30) Priority: 22.07.2010 US 841372
(71) Applicant: Sony Ericsson Mobile Communications AB, 221 88 Lund (SE)
(72) Inventor: Aronsson, Pär-Anders, 214 24 Malmö (SE); Backlund, Erik, 253 73 Gantofta (SE); Kristensson, Andreas, 211 28 Malmö (SE)
(74) Representative: VALEA AB

(57) **Abstract**

A device may obtain location information of an AR display device and obtain identifiers associated with objects that are within a field of view of the AR display device based on the location information. In addition, the device may obtain, for each of the objects, AR information based on the identifiers and determine, for each of the objects, a distance of the object from the AR display device. Furthermore, the device may generate, for each of the objects, images of the AR information at a virtual distance from the AR display device, the virtual distance corresponding to the determined distance. The device may display the generated images at the AR display device.

## Description

### BACKGROUND

An augmented reality device may enhance sensory data (e.g., audio, visual, tactile, etc.) that a user may otherwise perceive and may provide the enhanced sensory data (e.g., visual information) to the user. The enhanced sensory data may include, in addition to the original data, information pertaining to people, places, objects, and/or sounds that are described by the original data.

### SUMMARY

According to one aspect, a method may include obtaining, by an augmented reality (AR) device, location information of an AR display device. The method may further include obtaining, by the AR device, identifiers associated with objects that are within a field of view of the AR display device based on the location information. In addition, the method may include obtaining, for each of the objects, AR information based on the identifiers and determining, for each of the objects, a distance of the object from the AR display device. Further still, the method may include generating, for each of the objects, images of the AR information at a virtual distance from the AR display device, the virtual distance corresponding to the determined distance. In addition, the method may include displaying the generated images at the AR display device.

Additionally, determining the distance may include measuring the distance from the AR display device to the object, or obtaining a location of the object from the corresponding AR information and calculating a distance based on the location of the object and the location information of the AR display device.

Additionally, the method may further include receiving gaze tracking information from the AR display device to identify one or more of the objects. Additionally, determining, for one or more of the objects, a distance may include at least one of determining the distance based on the eye-tracking information, determining the distance via a laser distance meter, or determining the distance based on measurements by an infrared time-of-flight camera.

Additionally, determining, for each of the objects, a distance may include determining a distance of a stationary object from the AR display device, or determining a distance of a mobile object from the AR display device.

Additionally, generating images of the AR information may include generating images of the AR information at one of predetermined virtual distances.

Additionally, obtaining the AR information may include sending a request for the AR information to a remote database.

Additionally, obtaining the AR information may include receiving images from the AR display device, performing image recognition to identify mobile objects in the images, and obtaining AR information corresponding to the identified mobile objects.

Additionally, generating the images of the AR information may include generating images of the AR information for three-dimensional vision.

Additionally, the method may further include receiving a viewer input to activate a menu system, the receiving the viewer input further comprising at least one of: detecting eye blinking; determining an object at which the viewer gazes or looks; measuring brain waves; measuring muscle activity; detecting voice; or measuring hand or foot movements.

Additionally, receiving the viewer input may further include detecting a selection of an object that is not visible to the viewer but whose AR information is visible to the viewer.

According to another aspect, a device may include a processor to obtain location information associated with a display device and identify objects that are within a field of view of the display device. The processor may be further configured to obtain, for each of the objects, augmentation information from a remote device and determine, for each of the objects, a distance of the object from the display device. In addition, the processor may be configured to generate, for each of the objects, images of the augmentation information at a virtual distance corresponding to the determined distance, and display the generated images at the display device.

Additionally, the device may include a smart phone, a tablet computer, or a pair of augmented reality (AR) glasses.

Additionally, the object may include a stationary object and a mobile object.

Additionally, the device may include the display device.

Additionally, the device may further include at least one of a global positioning system satellite (GPS) receiver, an accelerometer, a gyroscope, a WiFi positioning system, a cell identifier (cell ID) component, or a combination of camera and image recognition component to recognize a specific position in surroundings based on images from the camera.

Additionally, the device may be configured to obtain eye-tracking information based on images of viewer's eyes.

Additionally, the processor may use the eye tracking information to identify a first object at which the viewer's eyes gaze or look.

Additionally, the processor may use the identity of the first object to prioritize a list of the objects whose augmentation information is to be obtained, whose distances from the device are to be determined, or whose augmentation information is to be displayed.

Additionally, the device may further include at least one of a Bluetooth interface, ANT interface, or WiFi interface for communicating with the display device.

According to yet another aspect, an augmented reality (AR) display device may include a receiver to determine location information, a camera to receive images of objects, a transmitter to send the location information and the images to a remote device, and a receiver to receive images that include AR information for each of the objects, the AR information identifying virtual distances corresponding to distances of the objects from the AR display device; and at least one display to display the received AR images at the identified virtual distances.

### BRIEF DESCRIPTION OF THE DRAWINGS

The accompanying drawings, which are incorporated in and constitute a part of this specification, illustrate one or more embodiments described herein and, together with the description, explain the embodiments. In the drawings:

Fig. 1A shows an exemplary augmented reality (AR) display device of an AR system;

Fig. 1B shows exemplary AR display device according to another implementation;

Fig. 1C shows an exemplary view provided by the AR display device of Fig. 1A;

Fig. 1D shows an exemplary view provided by the AR display device of Fig. 1A;

Fig. 2 shows an exemplary system in which concepts described herein may be implemented;

Fig. 3 is a block diagram of exemplary components of a device of Fig. 2;

Fig. 4 is a block diagram of exemplary functional components of an exemplary AR device of Fig. 2;

Fig. 5 is a block diagram of exemplary functional components of an exemplary AR information provider device of Fig. 2;

Fig. 6A illustrates displaying exemplary AR information without using distance information;

Fig. 6B illustrate displaying the AR information of Fig. 6A using the distance information; and

Fig. 7 is a flow diagram of an exemplary process for displaying AR information using distance information.

### DETAILED DESCRIPTION

The following detailed description refers to the accompanying drawings. The same reference numbers in different drawings may identify the same or similar elements.

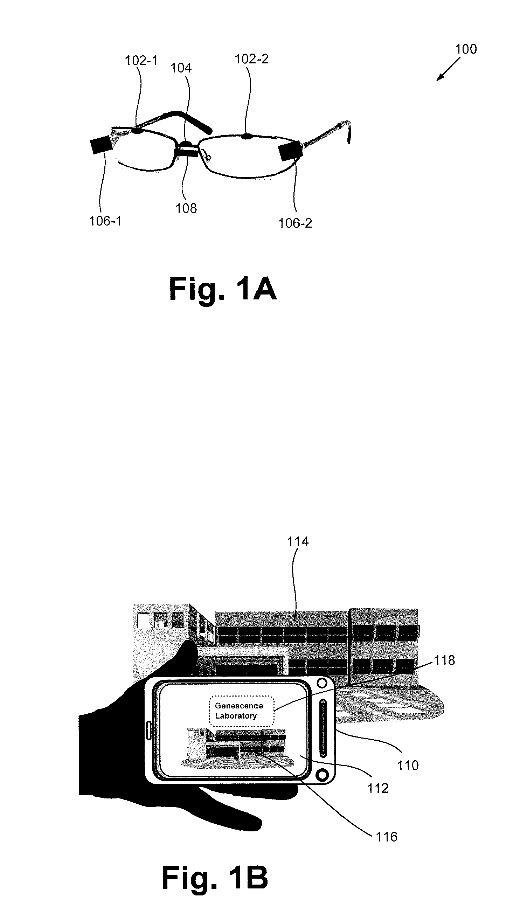

In the following, a device may display augmented reality (AR) information such that the information appears, to the viewer, to be at correct distances from the viewer. Figs. 1A through 1D illustrate concepts described herein. As used herein, the term "object" may include not only inanimate objects or things (e.g., a tree, rock, building, etc.) but also people, animals, or other living or moving objects.

Fig. 1A shows an exemplary AR display device 100. AR display device 100 may include eye cameras 102-1 and 102-2, front camera 104, projectors 106-1 and 106-2, and position/distance sensor 108. Eye cameras 102-1 and 102-2 may track eyes to determine the direction in which a viewer that wears device 100 is looking. Front camera 104 may receive images from surroundings, and position/distance sensor 108 may determine the position and/or orientation of AR display device 100. In addition, position/distance sensor 108 may determine distances from AR display device 100 to one or more objects in a field of view of AR display device 100. AR display device 100 may send the received images, the eye-tracking information, the position/orientation information, and the distance information to a remote device.

In response, the remote device may send, to AR display device 100, images of AR information associated with the images at AR display device 100. At AR display device 100, projectors 106-1 and 106-2 may project the AR information onto the lens-like screens. Projectors 106-1 and 106-2 may operate in combination to render three-dimensional images of the AR information in real time or near real time.

Depending on the implementation, AR display device 100 may include additional, fewer, different, or different arrangement of components than those illustrated in Fig. 1A. For example, in one implementation, display screens may exclude lens-like display screens, and include non-transparent LED screens (without projectors 106-1 and 106-2). Each of the LED screens may face each of the viewer's eyes. In such an implementation, rather than having the viewer receive some of the real-world images directly through the lenses, the images may be first received through a camera(s), processed at a remote device, and transmitted back to AR display device 100 to be displayed at the LED screens.

Fig. 1B shows an exemplary AR display device 110 according to another implementation. As shown, AR display device 110 may include a display screen 112. Display screen 112 may display images received via a rear camera (not shown). For example, in Fig. 1B, AR display device 110 may receive an image 116 of a building 114 via the rear camera and display image 116 on screen 112. AR display device 110 may receive images of AR information 118 that pertains to building 114 (e.g., the name of the building) and display AR information 118 on display 112.

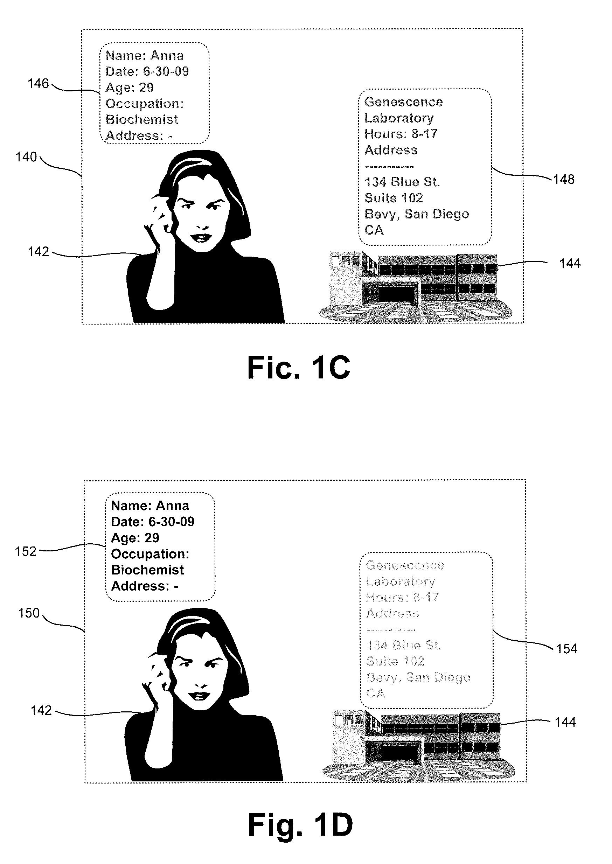

Fig. 1C shows an exemplary view of a scene provided to a viewer by AR display device 100. As shown, view 140 includes images of Anna 142, building 144, AR information 146 about Anna (e.g., age, date on which the viewer met Anna, etc.) and AR information 148 about building 144 (e.g., the name of business occupying building 144 (e.g., Genescence Laboratory), address, the type of business occupying the building, hours of operation, etc.).

Images of both Anna 142 and building 144 may be formed from light rays that emanate directly from Anna and the building in the environment surrounding AR display device 100 and impinge on the lenses of AR display device 100. When front camera 104 captures a corresponding view (e.g., a view that corresponds to view 140), AR display device 100 may send the captured images to a remote device. The remote device may analyze the images, obtain AR information about Anna 142 and building 144, and send images of the AR information to AR display device 100. As shown in Fig. 1C, AR display device 100 may display the received AR information 146 and 148.

In Fig. 1C, AR information 146 and 148 may be displayed such that each piece of information appears to be at a particular distance from the viewer. Consequently, when the viewer is looking at Anna 142 or building 144, the viewer may be unable to read AR information 146 or 148 without refocusing his/her gaze to AR information 146 or 148.

Because AR information 146 and 148 are projected to appear at distances different from those of Anna 142 and building 144, the viewer may encounter a number of problems. For example, if the viewer is interacting with Anna (e.g., talking to Anna over an interactive multimedia connection that includes a live video feed), it may be important for the viewer to give the impression that the viewer's attention is fully engaged on Anna, by looking Anna in the eyes (e.g., Anna is the viewer's boss). However, if AR information 146 is displayed at a different distance than Anna's face or body, reading AR information 146 may cause Anna to perceive that the viewer is not mentally "with her" (e.g., the viewer is not concentrating on or paying attention to Anna).

In another example, the viewer may find it physically inconvenient to refocus away from Anna 142 or building 144 in order to access AR information 146 or 148. Constant focusing and refocusing of the viewer's gaze on objects in the viewer's field of vision and AR information that is associated with the objects may result in physical discomfort (e.g., fatigue, headache, etc.).

Fig. 1D shows an exemplary view 150 of a scene provided to a viewer by AR display device 100. Assume that AR display system 100 in Fig. 1D is part of an AR system implemented in accordance with concepts described herein. In contrast to view 140, view 150 includes AR information 152 and AR information 154 that appear to be at the same distances as Anna 142 and building 144, respectively. In this scheme, there may be no need for the viewer to refocus his/her gaze in order to access or read AR information 152 and 154. Consequently, the viewer may not experience inconvenience and physical discomfort that are associated with the AR system of Fig. 1C.

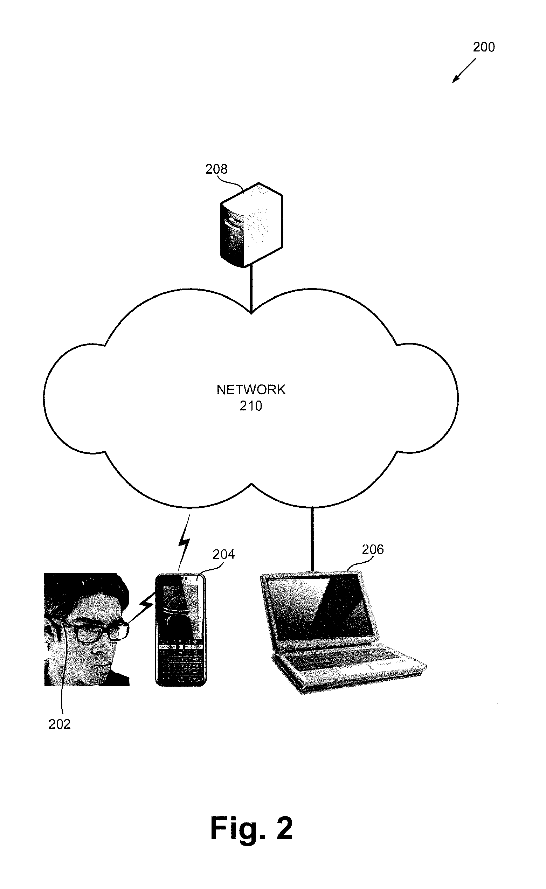

Fig. 2 shows an exemplary system 200 in which the concepts described herein may be implemented. As shown, system 200 may include AR display device 202, AR device 204, AR information provider device 206, AR information supplier 208, and network 210.

AR display device 202 may receive images from real world objects, obtain position/orientation information of AR display device 202, and transmit the images and the position/orientation information (e.g., location information obtained from a Global Positioning Satellite (GPS) receiver attached to AR display device 202, a gyroscope, accelerometer, WiFi positioning system, cell identifier, etc.) to AR device 204. In addition, AR display device 202 may receive processed images from AR device 204 and display them on one or more screens.

In some implementations, AR display device 202 may track the viewer's eyes, and send the eye-tracking information to AR device 204. Furthermore, AR display device 202 may include sensors for measuring a distance from AR display device 202 to a real object, and send the distance information to AR device 204.

AR device 204 may include any of the following devices: a tablet computer; a personal computer (PC); a mobile telephone; a cellular phone; a personal communications system (PCS) terminal that may combine a cellular radiotelephone with data processing, facsimile, and/or data communications capabilities; a laptop; a personal digital assistant (PDA) that can include a telephone; a mobile gaming device or console; or another type of computational or communication device.

AR device 204 may receive images, eye-tracking information, position/ orientation information, and distance information from AR display device 202. In addition, AR device 204 may process the images and send the processed images to AR display device 202.

In processing the images, AR device 204 may identify objects within the images, obtain AR information about the identified objects, and insert the AR information to be displayed into the images that are being processed. AR device 204 may send the resulting images to AR display device 202.

To insert or inject the AR information in the images received from AR display device 202, AR device 204 may determine, based on the eye tracking information received from AR display device 202, the distances of the identified objects within the images from AR display device 202. Furthermore, based on the distances, AR device 204 may place, in the received images, the AR information at appropriate virtual distances from the viewer.

AR device 204 may obtain the AR information by querying AR information provider device 206. In the query, AR device 204 may provide the images from AR display device 202, the position/orientation information of AR display device 202 (or the position/orientation information of AR device 204), and/or the eye-tracking information.

When AR information provider device 206 receives the query, AR information provider device 206 may identify different objects and/or items in the images based on the position/orientation information, the images, and/or the eye-tracking information (i.e.,. gaze tracking (one or both eyes)). Furthermore, AR information provider device 206 may retrieve AR information from its database based on the identified objects. AR information provider device 206 may send the retrieved AR information to AR device 204.

AR information supplier 208 may supply AR information provider device 206 with latest updates to AR information and/or other information stored at AR information provider device 206.

Network 210 may include a cellular network, a public switched telephone network (PSTN), a local area network (LAN), a wide area network (WAN), a wireless LAN, a metropolitan area network (MAN), personal area network (PAN), a Long Term Evolution (LTE) network, an intranet, the Internet, a satellite-based network, a fiber-optic network (e.g., passive optical networks (PONs)), an ad hoc network, any other network, or a combination of networks. Devices that are shown in Fig. 2 may connect to network 210 via wireless, wired, or optical communication links. Network 210 may allow any of devices 202-208 to communicate with any other device 202, 204, 206, or 208.

In Fig. 2, system 200 is illustrated for simplicity and ease of understanding. Although not shown, system 200 may include other types of devices, such as routers, bridges, servers, mobile computers, etc. In addition, depending on the implementation, system 200 may include additional, fewer, or different devices than the ones illustrated in Fig. 2. For example, in some embodiments, system 200 may include hundreds, thousands, or more mobile devices, servers, transaction devices, etc. In another example, in one implementation, as shown by AR display device of Fig. 1B, AR display device 202 may include the functionalities of both AR display device 202 and AR device 204. Still further, in some implementations, AR device 204 may include the functionalities of both AR device 204 and AR information provider device 206, or AR display device 202 may include the functionalities of both AR device 204 and AR provider device 206.

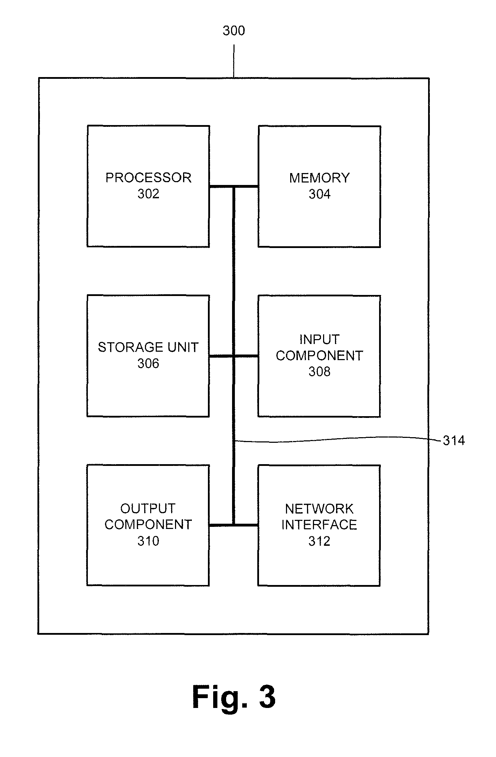

Fig. 3 is a block diagram of exemplary components of a device 300, which may represent any of devices 202-208. As shown in Fig. 3, device 300 may include a processor 302, memory 304, storage unit 306, input component 308, output component 310, network interface 312, and communication path 314.

Processor 302 may include a processor, a microprocessor, an Application Specific Integrated Circuit (ASIC), a Field Programmable Gate Array (FPGA), and/or other processing logic (e.g., audio/video processor) capable of processing information and/or controlling device 300. Memory 304 may include static memory, such as read only memory (ROM), and/or dynamic memory, such as random access memory (RAM), or onboard cache, for storing data and machine-readable instructions. Storage unit 306 may include storage devices, such as a floppy disk, CD ROM, CD read/write (R/W) disc, and/or flash memory, as well as other types of storage devices.

Input component 308 and output component 310 may include a display screen, a keyboard, a mouse, a speaker, a microphone, a Digital Video Disk (DVD) writer, a DVD reader, Universal Serial Bus (USB) port, and/or other types of components for converting physical events or phenomena to and/or from digital signals that pertain to device 300.

Network interface 312 may include a transceiver that enables device 300 to communicate with other devices and/or systems. For example, network interface 312 may communicate via a network, such as the Internet, a terrestrial wireless network (e.g., a WLAN), a cellular network, a satellite-based network, a wireless personal area network (WPAN), etc. Additionally or alternatively, network interface 312 may include a modem, an Ethernet interface to a LAN, and/or an interface/connection for connecting device 300 to other devices (e.g., a Bluetooth interface, WiFi interface, ANT interface, etc.). For example, in one implementation, AR display device 202 may communicate with AR device 204 via Bluetooth interfaces.

Communication path 314 may provide an interface through which components of device 300 can communicate with one another.

In different implementations, device 300 may include additional, fewer, or different components than the ones illustrated in Fig. 3. For example, device 300 may include additional network interfaces, such as interfaces for receiving and sending data packets. In another example, device 300 may include a tactile input device.

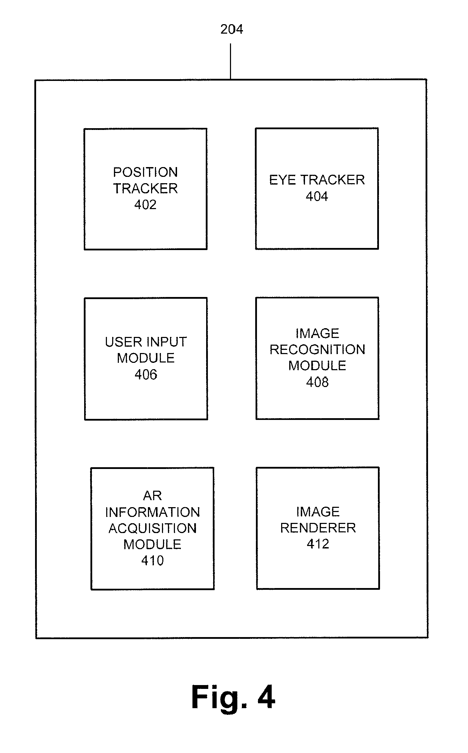

Fig. 4 is a block diagram of exemplary functional components of AR device 204. As shown AR device 204 may include a position tracker 406, eye tracker 404, user input module 406, image recognition module 408, AR information acquisition module 410, and image renderer 412. All or some of the components illustrated in Fig. 4 may be implemented by processor 302 executing instructions stored in memory 304. Depending on the implementation, AR device 204 may include additional, fewer, different, or different arrangement of functional components than those illustrated in Fig. 4.

Position tracker 402 may receive position/orientation information from AR display device 202 and track the position and orientation of AR display device 202. In some implementations, position tracker 402 may track the position/orientation of AR device 204 instead of AR display device 204. Furthermore, in some implementations, AR device 204 may use image recognition that is applied to images (e.g., images from either a camera installed on AR device 204 or AR display device 202) to determine a specific position in surroundings.

Eye tracker 404 may receive eye-tracking information from AR display device 202 and determine the direction at which the viewer is looking. For example, eye tracker 404 may include an IR camera that tracks the movements of a viewer's pupil and uses the placement of the pupil to calculate the direction of the viewer's gaze. AR device 204/AR information provider device 206 may use this direction information to identify an object at which the eyes are looking, as well as to determine a distance between AR display device 202/AR device 204 and the object.

User input module 406 may receive viewer input (e.g., via a keyboard, touch screen, etc.), and modify viewer preferences, display mode, etc. In one implementation, user input module 406 may display a graphical user interface (GUI) window for interacting with the viewer via a display screen on AR device 204 and/or AR display device 202. In another implementation, a viewer may select a set of criteria for AR device 202 to narrow points of interest (POI) for which AR device 204 queries AR information provider device 206. For example, the viewer may configure AR device 204 to display, at AR display device 202, only AR information that pertains to shoe stores. The input, thus, may limit the types of AR information that are to be displayed at AR display device 202.

In some implementations, user input module 406 may permit a viewer to configure AR device 204, such that different display areas that are displayed to the viewer may be prioritized. For example, user input module 406 may allow AR information about people to occupy greater space than other types of AR information (e.g., truncated by the AR information about a person). In some implementations, user input module 406 may configure AR device 204 such that an object that a user is gazing or looking has a high priority.

Image recognition module 408 may perform image recognition. Image recognition module 408 may, for example, distinguish images of a person, animal, or another type of object from other images. In some implementation, image recognition module 408 may be used to identify mobile objects (e.g., a person, dog, cat, car, etc.) within a view.

AR information acquisition module 410 may request AR information from AR information provider 206. The request may include images from AR display device 202, position/orientation information obtained from position tracker 402, identities of objects that are recognized by image recognition module 408, and/or eye-tracking information from eye tracker 404. In some implementations, the request may place higher priorities on obtaining AR information about objects that are close to or related to objects at which the viewer is looking or gazing. When AR information acquisition module 410 receives AR information corresponding to the request, AR image acquisition module 410 may provide the AR information to image renderer 412.

In one implementation, AR information may include a list of stationary (e.g., buildings, bridges, structures, trees, etc.) and non-stationary objects (e.g., person) that the viewer may perceive, given the position/orientation information and/or the eye-tracking information (e.g., gaze tracking information). In addition, AR information may include, for each of the objects, information specific to the object (e.g., address of a building, name of a person, etc.).

In some implementations, the AR information may include text and images that are to be combined with images of the identified objects. For example, assume that images received at AR device 204 include images of Jennifer, and that the AR information from AR information provider device 206 includes images of an outfit that Jennifer may wear. In such a case, the AR information may be combined with the images of Jennifer, to generate composite images in which Jennifer is wearing the outfit.

Image renderer 412 may receive images from AR display device 202, AR information from AR information acquisition module 410, position/orientation information from position tracker 402, and viewer's gaze angle (e.g., angle at which the viewer is looking) from eye tracker 404. Based on the gaze tracking (i.e., gaze angle) and the AR information (which may include a list of objects that the viewer may perceive), image renderer 412 may identify an object at which the viewer is looking and may obtain the distance from AR display device 202 to the object. Thereafter, image renderer 412 may generate an image of the AR information (e.g., image of text) such that, when the viewer views the image via AR display device 202, the AR information appears at an appropriate distance from the viewer (e.g., at the same distance as the object).

Image renderer 412 may determine the distance between the object and the viewer in one of several ways. For example, in one instance, image renderer 412 may determine the difference in the gaze angles of the viewer's right eye and left eye, and use this information to estimate the distance. In another implementation, AR information obtained from AR information provider device 206 may provide a physical location or geographical coordinates of the object. In such a case, image renderer 412 may determine the distance between AR display device 202 and the object based on their coordinates. In yet another implementation, image renderer 412 may measure the distance via a device or a component installed on either AR device 204 or AR display device (e.g., an acoustic sensor, laser distance meter, or an Infrared Time-of-Flight Range Camera, etc.).

In some implementations, image renderer 412 may determine distances between AR display device 202/AR device 204 and other objects that the viewer is not gazing or looking. In one implementation, image render 412 may determine distances for high priority objects (e.g., objects that are related to the object at which the viewer is gazing, a specific type of objects that the user specifies via a GUI, etc.). This may allow AR device 204 to determine the distances more quickly.

After determining the distance(s), image renderer 412 may generate images (e.g., images for the right and left eye) of the AR information at a proper virtual distance from AR display device 202 (or AR device 204). When the distance cannot be determined, image renderer 412 may generate the image with the AR information at a default virtual distance (e.g., a "presentation" distance). This may occur when the AR information is not associated with a specific object (e.g., AR information provides for heart rate, time, temperature, humidity, etc.). Image renderer 412 may send the generated images to AR display device 202.

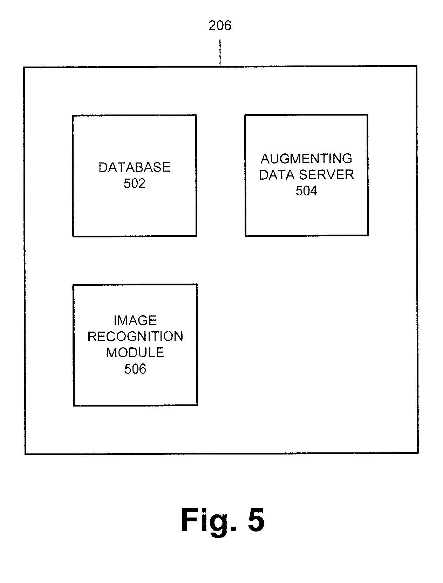

Fig. 5 is a block diagram of exemplary functional components of AR information provider device 206. As shown, AR information provider device 206 may include a database 502, augmenting data server 504, and image recognition module 506. Depending on the implementation, AR information provider device 206 may include additional, fewer, different, or different arrangement of functional components than those shown in Fig. 5.

Database 502 may include records for stationary or non-stationary objects that the viewer may perceive (e.g., a person, building, place, structure, etc.). For example, a record for a person may include, for example, information such as an age, address, name, occupation, images of the person, etc. In another example, a record for a place may include geographical coordinates, address, the name of a business which occupies the building, etc.

Augmenting data server 504 may receive a request for AR information from AR device 204, retrieve the AR information from database 502, and send the AR information to AR device 204. In retrieving the AR information, augmenting data server 504 may use information provided in the request to perform a look up in database 502.

For example, augmenting data server 504 may receive position/orientation information and eye-tracking information in the request. AR data server 506 may then perform a search in database 502 for a list of objects that may be within AR display device 202's field of vision. For each of the objects in the list, augmenting data server 504 may obtain AR information. The AR information may or may not include location information, depending on whether the object is stationary or mobile.

In some instances, augmenting data server 504 may receive a request that includes images received at AR display device 202. In such instances, augmenting data server 504 may call or access image recognition module 506 to identify objects that are within the images. When retrieved AR information for the identified objects does not include location information (e.g., coordinates), which may be the case when the objects are mobile objects, augmenting data server 504 may indicate to AR device 204 that the location information is not available for the objects.

In cases where the request places higher priorities on AR information about objects that are close to or related to an object at which the viewer is looking or gazing, augmenting data server 504 may restrict retrieving AR information to those higher priority objects. This may provide for faster a response to AR device 204.

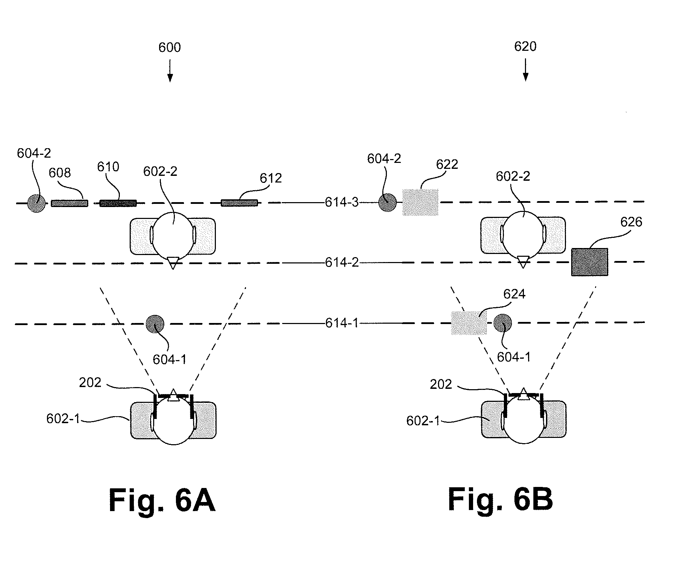

Fig. 6A illustrates displaying AR information without using distance information. As shown, AR environment 600 may include viewers 602-1 and 602-2 and objects 604-1 and 604-2. Viewer 602-1 may view viewer 602-2 and objects 604-1 and 604-2 via AR display device 202. In a different situation, environment 600 may include additional, fewer, different, and/or different arrangement of objects than those illustrated in Fig. 6A. For simplicity, Fig. 6A does not show other elements of AR system 200.

To viewer 602-1, AR display device 202 may show AR information 608, 610, and 612 for objects 604-1 and 604-2 (e.g., project AR information 608, 610, and 612). AR display device 202 may project AR information 608, 610, and 612 onto the screens of AR display device 202 such that AR information 608, 610, and 612 appears as if it is positioned at a viewing plane 614-3. That is, any of AR information 608-612 may appear as if it is located at invisible plane 614-3 that is at a fixed distance from AR display device 202.

Fig. 6B illustrates displaying AR information using distance information. To viewer 602-1, AR display device 202 may show a three-dimensional rendering of AR information 622, 624, and 626 corresponding to object 604-1, object 604-2, and viewer 604-2. That is, AR information 622, 624, and 626 is displayed at viewing planes 614-3, 614-1, and 614-2, respectively. Viewing planes 614-3, 614-1, and 614-2 may appear visually at locations corresponding to objects 604-2, 604-1, and viewer 602-2, respectively. Consequently, when viewer 602-1 is looking at object 604-1, object 604-2, or viewer 602-2, viewer 602-1 may not need to refocus his/her gaze to access or view AR information 622, 624, or 626.

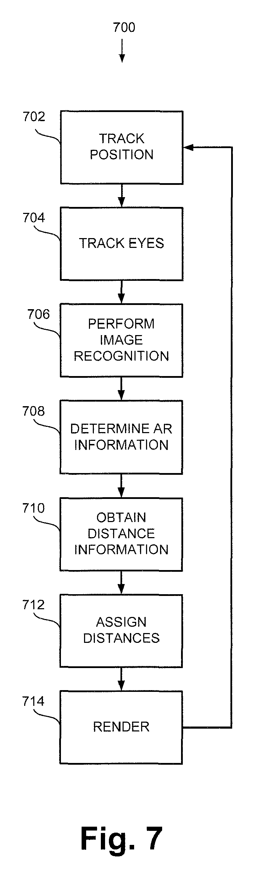

Fig. 7 is a flow diagram of an exemplary process 700 for displaying AR information using distance information. Assume that a viewer is using AR display device 202 that is communicating with AR device 204 (e.g., communicating over Bluetooth, ANT communication link, WiFi network, a wire, etc.). In addition, assume that AR device 204 is communicating with AR information provider device 206.

Process 700 may include AR display device 202 tracking its position and/or orientation (block 702). AR display device 202 may send the position/orientaiton information to AR device 204. The position information may be in, for example, langitude and or longitude, physical coordinates, an address, etc.

AR display device 202 may track the viewer's eyes (block 704). AR display device 202 may determine the direction in which the viewer is looking (e.g., based on Purkinje images, the orientation of AR display device 202, etc.). AR display device 202 may send the eye-tracking information to AR device 204.

AR device 204 may preform image recognition (block 706). As AR display device 202 sends images (e.g., images that are captured via front camera 104) to AR device 204, AR device 204 may perform image recognition on the received images. The image recognition may extract and/or recognize images of people and/or other moving objects.

Subsequently, AR device 204 may send a request for AR information to AR information provider device 206. The request may include position/orientation information of AR display device 202, the eye-tracking information, a list of objects that are recognized or identified by AR device 204 via image recognition, and/or images that are received from AR display device 202.

AR information provider device 206 may determine AR information (block 708). Using the position/orientation and eye-tracking information, AR information provider device 206 may determine a list of objects that may be within AR display device 202's field of vision, by performing a database lookup (e.g., query database 502). In performing the lookup, for example, AR information provider device 206 may look up a list of objects whose position is within a given distance (e.g., 10 kilometers) from AR display device 202 and within certain viewing angle (e.g., 170 degrees).

Once the list of objects is obtained, AR information provider device 206 may combine the list with a list of objects identified by image recognition at AR device 204 or by image recognition module 506. For each of the identified objects in the combined list, AR information provider device 206 may obtain AR information via a database lookup.

AR information provider device 206 may assign a distance for AR information corresponding to each of the objects in the combined list (block 710 and 712). For each stationary object in the list, corresponding AR information obtained via the database lookup may identify the location of the object. Based on the object's location, AR information provider device 206 may determine and assign its distance from AR display device 202 (e.g., based on a distance formula). AR information provider device 206 may send the AR information, the list of identified objects, and the distance information for each of the objects in the combined list to AR device 204 in a message or a response.

For a non-stationary object (e.g., a moving object such as a person), AR information provider device 206 may be unable to obtain the distance based on the retrieved AR information. For such objects, AR information provider device 206 may indicate that its distance from AR display device 202 is not known, in its response to AR device 204.

When AR device 204 receives the response/message from AR information provider 206, for each of the objects whose distance from the viewer is not known, AR device 204 may attempt to determine the distance. For example, AR device 204 may use an infrared Time-of-Flight Range Camera or a laser (e.g., installed on AR device 204 or AR display device 202) to determine AR display device 202's distance from the object. If the viewer is directly looking at the object, AR device 204 may use the eye-tracking information to measure the distance (e.g., difference between the right eye and left eye's angle). For objects whose distance cannot be determined via measurements, AR device 204 may indicate (e.g., in memory 304) that the distance is not known or the object is at a default or a presentation distance (e.g., 3 kilometers).

AR device 204 may render images of the AR information for the identified objects at correct/appropriate distances (block 714). AR device 204 may render the images for the right eye and left eye for three-dimensional effect. In some implementations, AR device 204 may render the AR information only at particular, selected distances. This may increase the speed at which the AR information is rendered.

In some implementations, AR device 204 may re-generate all of the images that are received at AR display device 202. In such instance, AR device 204 may interleave, via real time three-dimensional image generation techniques, the AR information at the correct/ appropriate distances. AR device 204 may send the rendered images to AR display device 202 for viewing and/or display them via AR device 204.

### CONCLUSION

In the above description, a device may display AR information that is associated with objects in a viewer's field of vision. The AR information may appear, to the viewer, to be approximately at the same distance as the corresponding objects. Accordingly, the viewer may not need to refocus his/her gaze away from the objects in order to access or view the AR information. Therefore, the viewer may not experience inconvenience and physical discomfort that are associated with some AR systems in which the AR information is virtually displayed far from the corresponding objects.

The foregoing description of implementations provides illustration, but is not intended to be exhaustive or to limit the implementations to the precise form disclosed. Modifications and variations are possible in light of the above teachings or may be acquired from practice of the teachings.

For example, in the above description, AR device 204 may obtain AR information based on the identity of objects that are associated with the AR information. In some implementations, AR device 204 may obtain AR information that is not associated with a specific object, such as a user's heart rate, time, temperature, humidity, physical location, etc. In such implementations, AR device 204 may assign one or more "presentation distances" to the AR information. Accordingly, image renderer 412.may generate images in which the AR information is displayed at the assigned virtual distances (i.e., presentation distances) from the viewer.

In another example, in the above description, AR device 204 and/or AR information provider device 206 may identify objects based on images, positions, etc. In some implementations, AR device 204/AR information provider device 206 may identify objects based on other techniques, technologies, and/or components. For example, AR device 204/AR information provider device 206 may perform generic object recognition (e.g., house, apple, etc.) or specific object recognition (e.g., a specific house, specific car model, a logo, etc.) based on computer vision. In another example, AR device 204/AR information provider device 206 may read or scan (e.g., via a camera and computer vision, a RFID scanner, etc.) tags that are attached to objects (e.g., a barcode or car registration number, manufacturer name, product name/number, RFID tag, etc.). In still another example, AR device 204/AR information provider device 206 may identify objects via a database of object identifiers and their associated object attributes (e.g., color, a three-dimensional features/description, weight, locality, static or dynamic characteristic/state (e.g., position), etc.

In yet another example, AR device 204 may include a graphical user interface (GUI) that is displayed as part of images that are shown to the viewer. In such implementations, the viewer may select a menu item or interact with a menu system by performing certain actions with eyes, such as focusing on a piece of menu item for longer than a given duration, blinking, etc. In other implementations, AR display device 202 or AR device 204 may include additional sensors (e.g., brain wave scanner, muscle activation measurement device, voice detector, speech recognition device/component, a device for measuring hand/foot movement (e.g., sensor gloves), etc.) via which the items on the menu may be selected. In some instances, such actions may be performed on objects that are not directly visible to the viewer, but for which AR information is visible.

In the above, while series of blocks have been described with regard to the exemplary process, the order of the blocks may be modified in other implementations. In addition, non-dependent blocks may represent acts that can be performed in parallel to other blocks. Further, depending on the implementation of functional components, some of the blocks may be omitted from one or more processes.

It will be apparent that aspects described herein may be implemented in many different forms of software, firmware, and hardware in the implementations illustrated in the figures. The actual software code or specialized control hardware used to implement aspects does not limit the invention. Thus, the operation and behavior of the aspects were described without reference to the specific software code - it being understood that software and control hardware can be designed to implement the aspects based on the description herein.

It should be emphasized that the term "comprises/comprising" when used in this specification is taken to specify the presence of stated features, integers, steps or components but does not preclude the presence or addition of one or more other features, integers, steps, components, or groups thereof.

Further, certain portions of the implementations have been described as "logic" that performs one or more functions. This logic may include hardware, such as a processor, a microprocessor, an application specific integrated circuit, or a field programmable gate array, software, or a combination of hardware and software.

No element, act, or instruction used in the present application should be construed as critical or essential to the implementations described herein unless explicitly described as such. Also, as used herein, the article "a" is intended to include one or more items. Further, the phrase "based on" is intended to mean "based, at least in part, on" unless explicitly stated otherwise.

## Claims

1. A method comprising:
obtaining, by an augmented reality (AR) device (204), location information of an AR display device (100);
obtaining, by the AR device (204), identifiers associated with objects that are within a field of view of the AR display device (100) based on the location information;
obtaining, for each of the objects, AR information (152, 154) based on the identifiers;
determining, for each of the objects, a distance of the object from the AR display device (100);
generating, for each of the objects, images of the AR information (152, 154) at a virtual distance from the AR display device (100), the virtual distance corresponding to the determined distance; and
displaying the generated images at the AR display device (100).

2. The method of claim 1, wherein determining the distance includes:
measuring the distance from the AR display device (100) to the object; or
obtaining a location of the object from the corresponding AR information (152, 154) and calculating a distance based on the location of the object and the location information of the AR display device (100).

3. The method of claim 1, further comprising:
receiving gaze-tracking information from the AR display device (100) to identify one or more of the objects,
wherein determining, for each of the objects, a distance includes at least one of:
determining the distance based on te gaze-tracking information;
determining the distance via a laser distance meter; or
determining the distance based on measurements by an infrared time-of-flight camera.

4. The method of claim 1, wherein determining, for each of the objects, a distance includes:
determining a distance of a stationary object from the AR display device (100); or
determining a distance of a mobile object from the AR display device (100).

5. The method of claim 1, wherein generating images of the AR information (152, 154) includes:
generating images of the AR information (152, 154) at one of predetermined virtual distances.

6. The method of claim 1, wherein obtaining the AR information includes:
receiving images from the AR display device (100);
performing image recognition to identify mobile objects in the images; and
obtaining AR information (152, 154) corresponding to the identified mobile objects.

7. The method of claim 1, wherein generating the images of the AR information (152, 154) includes:
generating images of the AR information (152, 154) for three-dimensional vision.

8. The method of claim 1, further comprising:
receiving a viewer input to activate a menu system, the receiving the viewer input further comprising at least one of:
detecting eye blinking; determining an object at which the viewer gazes or looks;
measuring brain waves; measuring muscle activity; detecting voice; or measuring hand or foot movements.

9. The method of claim 8, wherein receiving the viewer input further comprises:
detecting a selection of an object that is not visible to the viewer but whose AR information (152, 154) is visible to the viewer.

10. A device comprising:
a processor (302) to:
obtain location information associated with a display device;
identify objects that are within a field of view of the display device;
obtain, for each of the objects, augmentation information from a remote device;
determine, for each of the objects, a distance of the object from the display device;
generate, for each of the objects, images of the augmentation information at a virtual distance corresponding to the determined distance; and
display the generated images at the display device.

11. The device of claim 10, wherein the device comprises:
a smart phone, a tablet computer, or a pair of augmented reality (AR) glasses.

12. The device of claim 10, further comprising a component to provide the location information to the processor (302), wherein the component comprises at least one of:
a global positioning system satellite (GPS) receiver;
an accelerometer;
a gyroscope;
a WiFi positioning system;
cell identifier (cell ID) component; or
a combination of a camera and an image recognition component to recognize a specific position in surroundings based on images from the camera.

13. The device of claim 10, wherein the device is configured to obtain eye-tracking information based on images of viewer's eyes.

14. The device of claim 13, wherein the processor is further configured to use the eye tracking information to identify a first object at which the viewer's eyes gaze or look.

15. The device of claim 14, wherein the processor (302) is further configure to use the identity of the first object to prioritize a list of the objects whose augmentation information is to be obtained, whose distances from the device are to be determined, or whose augmentation information is to be displayed.
